(19) Europäisches Patentamt

European Patent Office

Office européen des brevets

(11) **EP 1 702 894 A1**

(12) **EUROPEAN PATENT APPLICATION**
published in accordance with Art. 158(3) EPC

(43) Date of publication:
20.09.2006 Bulletin 2006/38

(51) Int Cl.:
*C03B 18/22* (2006.01)    *C03B 18/16* (2006.01)

(21) Application number: 04807474.4

(22) Date of filing: 21.12.2004

(86) International application number:
PCT/JP2004/019117

(87) International publication number:
WO 2005/063635 (14.07.2005 Gazette 2005/28)

(84) Designated Contracting States:
DE FR

(30) Priority: 25.12.2003 JP 2003428974
03.06.2004 JP 2004165758

(71) Applicant: Asahi Glass Company, Limited
Chiyoda-ku, Tokyo 100-8405 (JP)

(72) Inventors:
• KAMIHORI, Toru
Yokohama-shi,
Kanagawa 2300045 (JP)

• MUKAI, Takashi
Yokohama-shi,
Kanagawa 2300045 (JP)
• KAGAMI, Tokuhiro
Yokohama-shi,
Kanagawa 2300045 (JP)

(74) Representative: Müller-Boré & Partner
Patentanwälte
Grafinger Strasse 2
81671 München (DE)

(54) **FLOAT BATH AND FLOAT MANUFACTURING PROCESS**

(57)    A float bath and a float-forming method is provided, which can form a glass having high forming temperature without shortening the lifetime of straps for supplying electricity to heaters.

A float bath 10 has a bottom 12 filled with molten tin 11, and a roof 14 for covering the bottom 12. A space in the roof 14 is separated into an upper space 20 and a lower space 21 by a roof brick layer 16, and heaters 18 are disposed through holes 17 formed in the roof brick layer 16. The thickness of the roof brick layer 16 is at least 320 mm.

F i g. 1

EP 1 702 894 A1

**Description**

TECHNICAL FIELD

The present invention relates to a float bath and a float forming method suitable for float-forming a glass whose viscosity becomes $10^4$ poise at a temperature (hereinafter this temperature is referred to as forming temperature) higher than that of soda lime silica glass.

BACKGROUND ART

Heretofore, glass sheets produced by float-forming soda lime silica glass in a molten state, has been widely used for window glasses of e.g. buildings and automobiles, glass substrates for STN liquid crystal displays and the like.

The method of float-forming soda lime silica glass in a molten state, was invented by an employee of Pilkington plc of United Kingdom in 1952, industrialized in 1959 and licensed for glass sheet manufacturers over the world thereafter. As a result, the number of facilities (float bath) for producing soda lime silica glass sheets by float-forming became at least 150 in 1996, and float-forming is a main production method for soda lime silica glass sheets presently (refer to Non-Patent Document 1).

A float bath is a huge bath with molten tin, and an upper space above the molten tin (a space covered by a roof) is separated into an upper space and a lower space by a roof-brick layer, and many heaters (usually heaters made of SiC) are disposed through many holes formed on the roof-brick layer. These heaters are connected to e.g. a busbar disposed in the upper space above the roof-brick layer by electric wires via aluminum straps, whereby e.g. an atmosphere above the molten tin is heated by heat generated by heat-generating portions of the heaters projecting in the lower space under the roof brick layer.

Basic specifications of such a float bath such as the structure, basic dimensions, component dimensions and the like, have been specified in the specification document presented by the licenser to each glass sheet manufacturer at a time of licensing, and are used without change. In other words, these specifications are common over the world.

The reason why the basic specifications of float bath are thus common over the world, is as follows.

Namely, cost for float glass manufacturing equipment including a float bath is huge, and a production stop due to a trouble after start of production causes a huge loss. Accordingly, basic specifications expected to ensure successful production, are not usually changed, and improvements of production efficiency and product quality are attempted by e.g. adjustment of facility operating conditions within a possible range. As a result, the basic specifications have not been changed and have become common over the world.

By the way, for a glass substrate of TFT liquid crystal display (TFT-LCD), a non-alkali glass having a forming temperature higher by at least 100°C than that of soda lime silica glass, is employed, and a fusion method was initially used for producing glass sheets for the glass substrate. However, increase of the size of glass substrates is required thereafter, and production of non-alkali glass sheets by a float method more suitable for such a requirement, has brought into practice.

Non-Patent Document 1: "Glass engineering handbook" edited by Masayuki Yamane etc. first edition, published by Asakura Shoten, July 5, 1999, pages 358-362

DISCLOSURE OF THE INVENTION

PROBLEMS TO BE SOLVED BY THE INVENTION

However, various problems arise when a non-alkali glass having a forming temperature higher by at least 100°C than that of soda lime silica glass, is formed into a glass sheet by using a float method or a float bath established for soda lime silica glass.

Such problems includes rise of the temperature of an atmosphere of the above-mentioned upper space (hereinafter, it may be simply referred to as upper space) to be described later.

In the upper space, e.g. electric wiring components such as busbars, electric wires and straps, and power supply portions of heaters to be connected with the straps, and the like are present.

Among these electric wiring components, aluminum straps directly connected to the power supply portions of heaters having a highest temperature due to heat conduction from heat-generating portions, has the highest temperature.

These straps may be damaged by such a high temperature, which causes to prevent power supply to a heater to which the strap is attached, and prevents sufficient heating. When such a damage occurs, it is unlikely that such a trouble occurs to only one strap but it is likely that the trouble occurs to many straps at the same time in most cases, and in such a case, heating is substantially prevented and production has to be stopped.

In order to prevent such a stop of production due to damage of straps, an atmospheric temperature T (hereinafter referred to as T) in the upper space is usually controlled so as not to exceed 300°C. Here, the reason why direct control of strap temperature is not conducted, is because the measurement is not easy and the number of heaters, namely, the number of straps are extremely large.

The 300°C as the control upper limit of T is established as a temperature guaranteeing no occurrence of strap damage for a long period such as 10 years based on actual performances and experiences obtained by long time application of float method to soda lime silica glass.

By the way, if a glass having higher forming temperature (hereinafter, it may be referred to as high viscosity glass) than soda lime silica glass, is formed by float method, T becomes higher as compared with a case of forming soda lime silica glass by float method.

When T almost exceeds 300°C, usually a volume flow rate $V_g$ (hereinafter referred to as $V_g$) of atmospheric gas (typically a mixed gas of nitrogen and hydrogen) is increased. Here, the atmospheric gas is introduced through a hole provided in e.g. an upper face of the roof casing into the upper space, and cools e.g. electric wiring components, and introduced through holes of the roof brick layer into the lower space to prevent oxidation of molten tin.

Increase of such a $V_g$ not only causes a vicious cycle that decrease of heating by heaters → increase of heater power to compensate the decrease → another increase of T → increase of $V_g$, but also increases a risk of generation or increase of tin defects in a glass ribbon (top speck).

Recently, the size of glass substrates for TFT-LCD has been increased, and demand for high quality has been increased. However, the above-mentioned increase of top speck reduces production efficiency, in particular, production efficiency of large-sized above-mentioned substrates.

Further, requirements to properties of glasses to be employed for the substrates, have become high level and a glass satisfying such requirements has been developed. However, the forming temperature of such a glass usually becomes higher. Namely, T becomes higher.

As a result, at a time of float-forming a glass for TFT-LCD substrates, it has become required to make T at most 300°C without generating or increasing top speck due to increase of $V_g$.

It is an object of the present invention to provide a float bath and a float-forming method capable of solving such problems.

MEANS FOR SOLVING THE PROBLEMS

The present invention provides a float bath comprising a bottom filled with molten tin and a roof for covering the bottom, wherein a space in the roof is divided into an upper space and a lower space by a roof brick layer, and a heater is disposed through a hole formed in the roof brick layer, characterized in that the roof brick layer has a thickness of at least 320 mm.

Further, the present invention provides the float bath, wherein a gap between an inner surface of the hole formed in the roof brick layer and the heater in the hole, that is averaged in a circumferential direction, is at most 20 mm.

Further, the present invention provides the float bath, wherein the heater has an outer diameter of from 23 mm to 50 mm at least at a heat-generating portion in the lower space.

Further, the present invention provides a float forming method for forming a glass whose viscosity becomes $10^4$ poise at a temperature of at least 1,100°C, by a float process, characterized in that the method comprises continuously pouring the glass in a molten state from one end of the float bath as defined in any one of Claims 1 to 3 onto the molten tin, forming the glass into a glass ribbon on the molten tin, and continuously drawing out the glass ribbon from the other end of the float bath.

Further, the present invention provides the float forming method, wherein the glass ribbon is continuously drawn out at a speed of from 1 to 200 tons/day.

The present inventors have achieved the present invention in the following way.

A non-alkali glass AN635 (trade name manufactured by Asahi Glass Company, Limited; forming temperature = 1,210°C) has been used for a glass of TFT-LCD for a long time, and as the non-alkali glass satisfying the above-mentioned high-level requirements to glass properties, AN100 (trade name manufactured by Asahi Glass Company, Limited; forming temperature = 1,268°C) has been developed.

However, it has turned out that if AN100 is float-formed by using a float bath dedicated for float-forming AN635, load to a unit area of heaters becomes too large and it is difficult to carry out production for a long time.

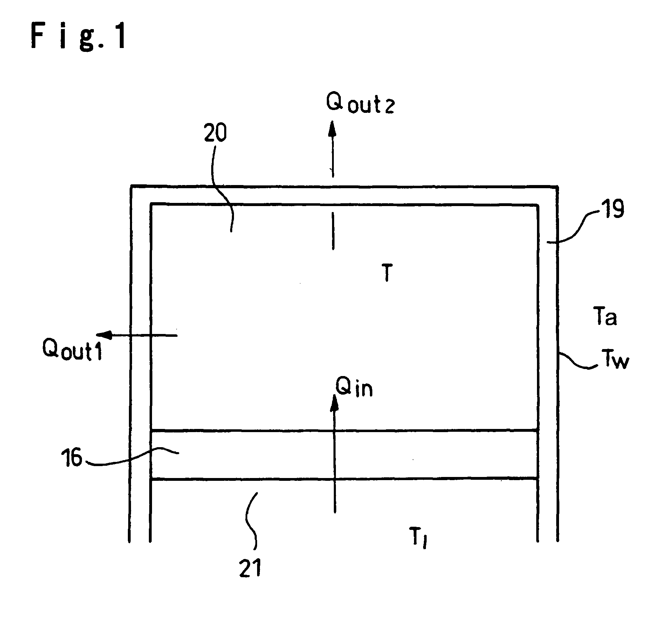

To cope with this problem, the diameter of heat-generating portion of heaters disposed in the lower space under the roof brick layer, is increased from conventional 20 mm to 25 mm to reduce the load of heaters, and as a result, T is successfully decreased to 320°C by increasing $V_g$ within a range that risk of increasing top speck does not significantly increase. In order to further ensure long time production of AN100 using the float bath, the present inventors have conducted various measurements to the float bath, and from the result of measurements, they constructed the following calculation model. Fig. 1 is an explanation view of the calculation model.

The calculation model is a heat balance model of the upper space 20.

Incoming heat is a heat transfer $Q_{in}$ from the lower space 21.

Outgoing heat are a heat radiation to the outside $Q_{out1}$ from a portion (hereinafter referred to as wall face portion) of the roof casing in contact with the upper space 20, and a heat quantity $Q_{out2}$ consumed to increase the temperature of atmospheric gas supplied to the upper space 20, and a formula $Q_{in} = Q_{out1} + Q_{out2}$ is satisfied.

$Q_{out1}$ is represented by the following formula using an external temperature $T_a$, an area $A_w$ of the wall face portion, and a general heat transfer coefficient $h_c$:

$$Q_{out1} = h_c A_w (T - Ta)$$

wherein $h_c$ is determined by $Q_{out1}$, measured values of $T_a$ and $T$, and $A_w$. Here, $Q_{out1}$ can be obtained from $T_a$, $A_w$, an external face temperature $T_w$ of the wall face portion and a heat transfer coefficient $h_w$ by using a relational formula $Q_{out1} = h_w A_w (T_w - T_a)$.

$Q_{out2}$ is represented by the following formula using $T$, $T_a$, and a volume flow rate $V_g$, a density $\rho_g$ and a specific heat $C_g$ of atmospheric gas:

$$Q_{out2} = V_g \rho_g C_g (T - T_a)$$

$Q_{in}$ is represented by the following formula using an atmospheric temperature $T$ of the upper space 20, an atmospheric temperature $T_1$ of the lower space 21, and an area $A_r$, a general heat transfer coefficient $h_r$ and thickness $t$ of the roof brick layer 16:

$$Q_{in} = h_r A_r (T_1 - T)$$

By representing $h_r = k/t$ using a coefficient $k$, the above formula becomes:

$$Q_{in} = (k/t) A_r (T_1 - T) .$$

$k$ is determined by actually measured values of $T_1$ and $T$, $Q_{in}$, $t$ and $A_r$, and $Q_{in}$ is obtained as a sum of $Q_{out1}$ and $Q_{out2}$. Namely, from a formula $Q_{in} = Q_{out1} + Q_{out2}$, the following formula is satisfied:

$$(k/t) A_r (T_1 - T) = h_c A_w (T - Ta) + V_g P_g C_g (T - T_a)$$

$$= (h_c A_w + V_g \rho_g C_g)(T - T_a) \quad \cdot \cdot \cdot (1)$$

From Formula (1), a relational formula between $t$ and $T$ can be obtained.

Since $T = 320°C$ when $t = 292$ mm (the above-mentioned basic specification common over the world), the relational formula (1) of $t$ and $T$ can be represented by the following formula provided that mm and °C is used for the units of the thickness and the temperature respectively:

$$(k/292) A_r (T_1 - 320) = (h_c A_w + V_g \rho_g C_g)(320 - T_a) \quad \cdot \cdot \cdot (2)$$

On the other hand, when the thickness is $t$ and the atmospheric temperature is $T_1$, Formula (1) is applicable, and by dividing left and right sides of Formula (1) by those of Formula (2) respectively, the following formula is obtained:

$$[(k/292)A_r(T_1-320)]/[(k/t)A_r(T_1-T)]$$

$$= [(h_cA_w + V_g\rho_gC_g)(320-T_a)]/[(h_cA_w + V_g\rho_gC_g)(T-T_a)]$$

This formula is organized into:

$$(t/292)[(T_1-320)/(T_1-T)] = (320-T_a)/(T-T_a)$$

and the above formula is further organized into the following formula:

$$t/292 = [(T_1-T)/(T_1-320)][(320-T_a)/(T-T_a)]$$

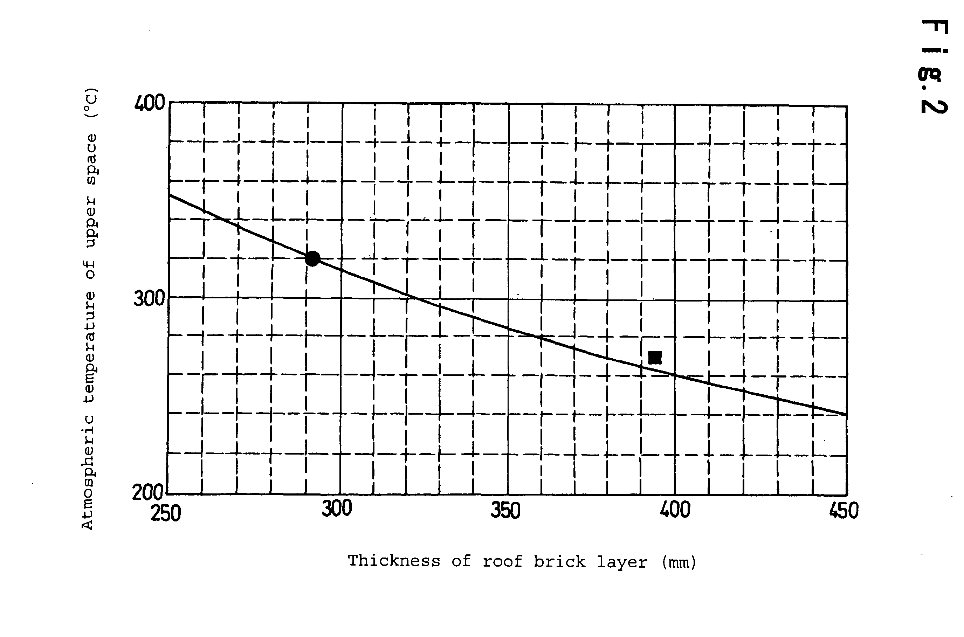

Fig. 2 is a view showing the relation between t and T drafted by using actually measured values ($T_1$ = 1,065°C, $T_a$ = 40°C) at a time of producing the above AN100. Here, the black circular dot shows an actual data at the time of producing the above AN100.

From Fig. 2, it was understood that by making the thickness t of the roof brick layer 16 at least 320 mm, the atmospheric temperature T of the upper space 20 can be at most 300°C, which lead to the present invention.

EFFECTS OF THE INVENTION

According to the present invention, it becomes possible to float-form such a high-viscosity glass that extremely shortens the equipment lifetime or significantly increases a risk of generating or increasing top speck when the glass is float-formed by using a conventional float bath, without increasing such a risk.

Further, it becomes possible to suppress the flow rate of an atmospheric gas for lowering an upper space atmospheric temperature, and thus it become possible to fundamentally suppress generation of top speck at a time of float-forming such a high-viscosity glass that intermittently produces top speck although the glass has been generating no significant top speck heretofor.

BRIEF DESCRIPTION OF THE DRAWINGS

Fig. 1: A calculation model to obtain a heat balance of the upper space.
Fig. 2: A view showing a relation between the thickness t of roof brick layer and the atmospheric temperature T of upper space, produced by using actually measured values at a time of producing non-alkali glass.
Fig. 3: A cross sectional view schematically showing a float bath according to the present invention.
Fig. 4: A schematic view of PBA observed from a side.
Fig. 5: An enlarged cross sectional view of substantial part showing a gap between a hole of the roof brick layer and a heater.

EXPLANATION OF NUMERALS

10:　Float bath
11:　Molten tin
12:　Bottom
14:　Roof
16:　Roof brick layer
17:　Hole
18:　Heater
20:　Upper space

21: Lower space

BEST MODE FOR CARRYING OUT THE INVENTION

From now, embodiments according to the present invention are described in detail with reference to drawings. Here, the present invention is not limited to these embodiments.

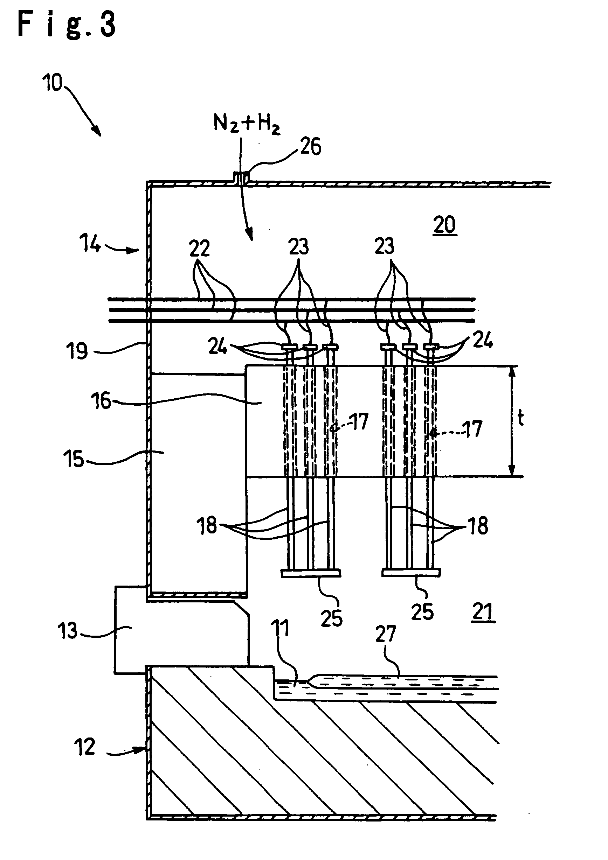

Fig. 3 is a view schematically showing a cross section (a part) of a float bath of the present invention. A float bath 10 has a bottom filled with molten tin 11, and a roof covering the bottom 12.

The maximum width of the molten tin 11 in the float bath 10 depends on the size of the float bath 10 and typically from 1 to 10 m.

The roof 14 has a roof casing 19 made of a steel and hanged from an upper structure (not shown) such as a beam of a building where the float bath is installed, a side wall 15 made of a keep-warm brick and being a lining for a lower part of the roof casing 19, and a side seal 13 made of a steel and having a box shape and disposed on an edge portion of the bottom 12.

A space in the roof 14 is separated into an upper space 20 and a lower space 21 by a roof brick layer 16.

The roof brick layer 16 as a construction that substantially rectangular solid-shaped combined brick blocks called PBA are mounted on a grid-shaped framework constructed by assembling many support tiles (not shown) made of sillimanite and rail tiles (not shown) disposed on the support tiles so as to be perpendicular to the support tiles. The support tiles are hanged from e.g. a ceiling portion of the roof casing 19 by a member (not shown) called hanger. Namely, the roof brick layer 16 is retained horizontally at a desired height above the molten tin by the hanger.

Here, a side surface of the roof brick layer 16 contact with an upper portion of a side surface of the side wall 15, and the upper face of the roof brick layer 16 is set so as to be approximately the same height as the upper face of the side wall 15.

Then, holes 17 are formed in the roof brick layer 16 so as to install the heaters 18 through the holes.

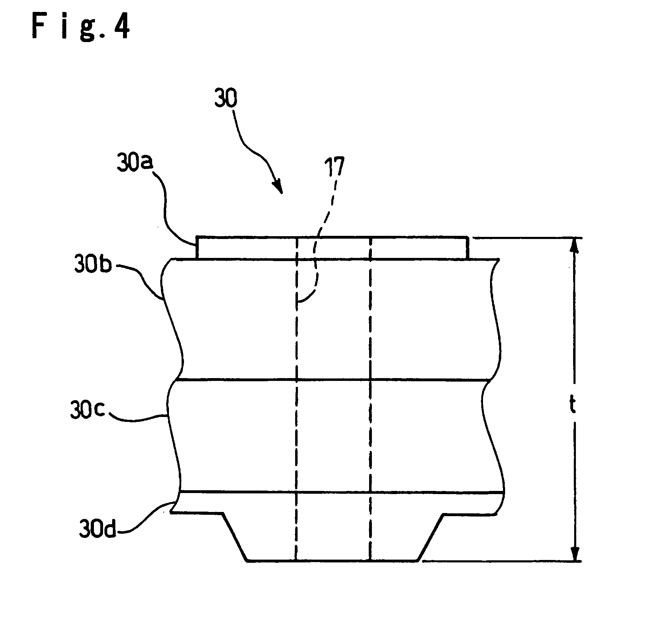

Fig. 4 is a schematic view observed from the side of a PBA30.

The PBA30 is a combined brick block formed by assembling a heat-insulating ceramics plate 30a, a keep-warm brick 30b for low temperature, a keep-warm brick 30c for high temperature and a sillimanite brick 30d, made of e.g. Insulating Board Hemisul (trade name) manufactured by Tokyo Materials Co., Ltd., and tightened by a hanger (another hanger different from the above-mentioned hanger for hanging the roof brick layer 16 from e.g. a ceiling portion of the roof casing 19), not shown. Irregular-shaped portions in the left and right sides of the sillimanite brick 30d are portions to be mounted on support tiles.

Holes 17 for installing the heaters through the holes, are formed so as to perforate through the PBA30. t is a distance between the upper face of the ceramics plate 30a and the lower face of the sillimanite brick 30d, namely, the thickness of PBA30 which correspond to the thickness of roof brick layer 16.

Heretofore, t has been 292 mm commonly over the world as described above, but in the present invention, t is set to be at least 320 mm. By thus constructing, it becomes possible to float-forming a high-viscosity glass such as a non-alkali glass for TFT-LCD without significantly increasing flow rate of atmospheric gas ($N_2 + H_2$). t is preferably at least 340 mm, more preferably at least 360 mm. Here, t is typically at most 500 mm. Further, the heat-generating portion 18C of a heater 18 in the lower space, preferably has a heater outer diameter of from 23 mm to 50 mm, more preferably from 23 mm to 30 mm, particularly preferably about 25 mm.

Back to Fig. 3, three busbars 22 are disposed in parallel with each other in the upper space 20, and they are connected with heaters 18 via electric wires 23 and straps 24 made of aluminum.

The heaters 18 are usually made of SiC, and three heaters are grouped and lower ends of these heaters are connected each other by a connecting member 25 to constitute a unit. Here, the heat-generating portion 18C of each heater 18 has a substantially cylindrical shape having an outer diameter of 25 mm.

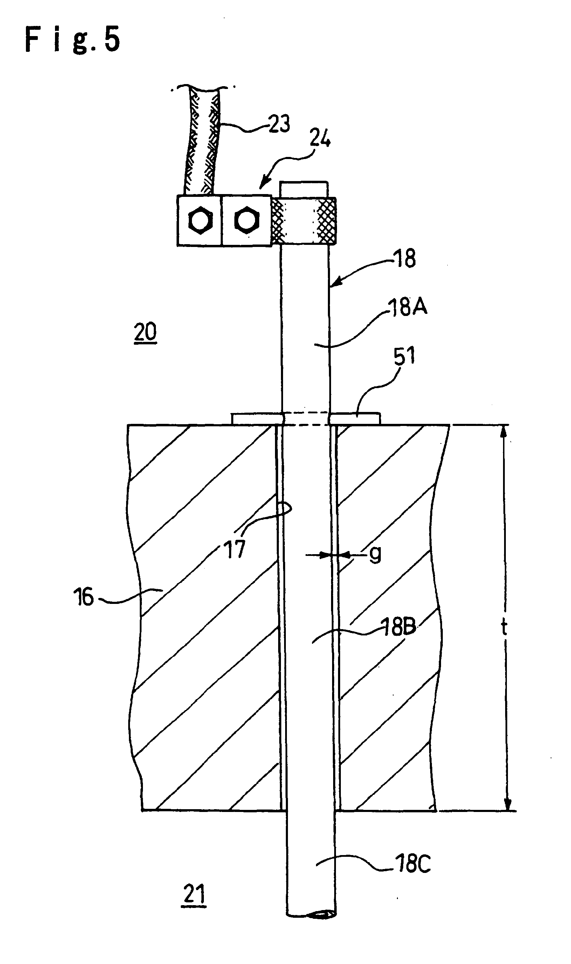

As shown in Fig. 5, each of these heaters 18 has a power supply portion 18A projecting upwardly from the roof brick layer 16 and to which a strap 24 is attached, a non-heat generating portion 18B present below the power supply portion 18A and present in a hole 17 of the roof brick layer 16, and a heat-generating portion 18C present below the non-heat generating portion 18B and projecting into the lower space 21. In the heater 18, a through hole (not shown) is formed in the vicinity of a border between the power supply portion 18A and the non-heat generating portion 18B, and by an attachment pin 51 inserted into the through hole, the heater 18 is hanged from the roof brick layer 16.

A gap g between an inner face of the hole 17 of the roof brick layer 16 and a heater 18 (corresponding to non-heat-generating portion 18B) present in the form 17, that is averaged in a circumferential direction, is typically at least 0.5 mm (more preferably at least 1 mm) and at most 20 mm (more preferably at most 10 mm), and the portion of the heater 18 where g averaged in a circumferential direction is at least 0.5 mm and at most 20 mm, is preferably at least 80% of the length (= t) of the hole 17, more preferably 100%.

Returning again to Fig. 3, into the upper space 20, an atmospheric gas (a mixed gas of $N_2$ and $H_2$) is supplied as shown in the arrow from a supply port 26 of the roof casing 19, to suppress rise of atmospheric temperature T of the upper space 20.

T is, as described above, set to a proven controlled temperature, namely 300°C or lower, considering that prevention of equipment trouble due to a damage of the strap 24 as the highest priority. Flow rate of the atmospheric gas used in this case can be set so that the flow rate does not significantly increase top speck.

Here, atmospheric gas supplied to the upper space 20 flows into the lower space 21 through e.g. each gap g between a hole 17 and a heater 18 (a non-heat-generating portion 18B of Fig. 5), to prevent oxidation of the molten tin 11.

In the float forming method of the present invention, a glass having a forming temperature of at least 1,100°C is float-formed by employing such a float bath.

Namely, from a known spout lip (not shown, it is present for example in the back side of Fig. 3.) present at one end (upstream end) of the float bath 10, a glass molten in e.g. a glass-melting tank, is continuously poured on a molten tin 11. The molten glass continuously poured on the molten tin 11 is formed into a glass ribbon 27 having a desired shape by a known method. The glass ribbon 27 is continuously drawn out from the float bath 10 by a lift out roller (retrieving roller) present in adjacent to the other end (downstream end) of the float bath 10. Here, the glass ribbon 27 is continuously drawn out typically at a rate of 1 to 200 ton/day.

The glass ribbon drawn out by the lift out roller, is gradually cooled in a layer (gradual cooling furnace) and then, cut into a desired shape to be a glass sheet.

By employing the float-forming method of the present invention, it becomes possible to float-form a high-viscosity glass without particularly increasing the number of top speck and without increasing a risk of causing such a case that production has to be stopped even for a short time.

The present invention is not limited to the above-mentioned embodiments, and can be made appropriate modifications and improvements, and the bottom, the roof, the roof brick layer, the upper space, the lower space, the heater, the atmospheric gas, the temperature, the pulling out amount, and the material, the shape, the dimension, the shape, the number, the disposed position and the thickness of members of float bath and the like exemplified in the above-mentioned embodiments, are optional within a range departing from the object of the present invention.

Further, the high-viscosity glass is not limited to a glass for TFT-LCD substrate, but it can, for example, be a glass for a plasma display panel substrate.

Further, the float bath of the present invention may be used for float-forming not only a high-viscosity glass but also a soda lime glass.

EXAMPLE

AN100 is float-formed by employing a float bath (thickness t of roof brick layer: 394 mm; a gap $g_{AV}$ between an inner face of a hole of roof brick layer and a heater inserted in the hole, that is averaged in a circumferential direction: 9 mm) of the present invention.

When the volume flow rate $V_g$ of the atmospheric gas is set to be 95% of $V_g$ by which T became 320°C at a time of float forming AN100 in the float bath (t: 292 mm, $g_{AV}$: 9 mm) employed for float-forming the above AN635, T became 270°C (black square in Fig. 2). Since $V_g$ is reduced, generation of top speck was suppressed and no significant reduction of equipment lifetime due to strap damage, was observed.

INDUSTRIAL APPLICABILITY

According to the present invention, it becomes possible to float form a high-viscosity glass which tends to significantly shorten equipment lifetime and tends to generate or increase top speck when the glass is float-formed by using a conventional float bath, without increasing such a risk.

**Claims**

1. A float bath comprising a bottom filled with molten tin and a roof for covering the bottom, wherein a space in the roof is divided into an upper space and a lower space by a roof brick layer, and a heater is disposed through a hole formed in the roof brick layer, **characterized in that** the roof brick layer has a thickness of at least 320 mm.

2. The float bath according to Claim 1, wherein a gap between an inner surface of the hole formed in the roof brick layer and the heater in the hole, that is averaged in a circumferential direction, is at most 20 mm.

3. The float bath according to Claim 1 or 2, wherein the heater has an outer diameter of from 23 mm to 50 mm at least at a heat-generating portion in the lower space.

4. A float forming method for forming a glass whose viscosity becomes $10^4$ poise at a temperature of at least 1,100°C, by a float process, **characterized in that** the method comprises continuously pouring the glass in a molten state from one end of the float bath as defined in any one of Claims 1 to 3 onto the molten tin, forming the glass into a glass ribbon on the molten tin, and continuously drawing out the glass ribbon from the other end of the float bath.

5. The float forming method according to Claim 4, wherein the glass ribbon is continuously drawn out at a speed of from 1 to 200 tons/day.

# Fig.1

# Fig.2

Thickness of roof brick layer (mm)

Atmospheric temperature of upper space (°C)

# Fig.3

$N_2 + H_2$

Fig.4

# F i g. 5

## INTERNATIONAL SEARCH REPORT

| | International application No. |
|---|---|
| | PCT/JP2004/019117 |

A. CLASSIFICATION OF SUBJECT MATTER
    Int.Cl⁷  C03B18/22, 18/16

According to International Patent Classification (IPC) or to both national classification and IPC

B. FIELDS SEARCHED

Minimum documentation searched (classification system followed by classification symbols)
    Int.Cl⁷  C03B18/22, 18/16

Documentation searched other than minimum documentation to the extent that such documents are included in the fields searched
    Jitsuyo Shinan Koho          1922–1996   Jitsuyo Shinan Toroku Koho   1996–2005
    Kokai Jitsuyo Shinan Koho    1971–2005   Toroku Jitsuyo Shinan Koho   1994–2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-310421 A  (Asahi Glass Co., Ltd.), 09 November, 1999 (09.11.99), Full text (Family: none) | 1-5 |
| A | JP 11-21137 A  (Asahi Glass Co., Ltd.), 26 January, 1999 (26.01.99), Full text (Family: none) | 1-5 |
| A | JP 7-242431 A  (Tokai Konetsu Kogyo Co., ) Ltd.), 19 September, 1995 (19.09.95), Full text (Family: none) | 1-5 |

☒  Further documents are listed in the continuation of Box C.     ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 March, 2005 (23.03.05) | 12 April, 2005 (12.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/019117 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 52-42810 B1  (Ford Motor Co.),<br>26 October, 1977 (26.10.77),<br>Full text<br>& US 3399985 A          & DE 1596435 A1 | 1-5 |
| A | JP 3-290329 A  (PPG Industries Inc.),<br>20 December, 1991 (20.12.91),<br>Full text<br>& EP 433937 A1          & US 5007950 A | 1-5 |
| A | JP 55-20288 A  (PPG Industries Inc.),<br>13 February, 1980 (13.02.80),<br>Full text<br>(Family: none) | 1-5 |
| A | JP 6-239631 A  (Asahi Glass Co., Ltd.),<br>30 August, 1994 (30.08.94),<br>Full text<br>(Family: none) | 1-5 |

Form PCT/ISA/210 (continuation of second sheet) (January 2004)

## REFERENCES CITED IN THE DESCRIPTION

### Non-patent literature cited in the description

- Glass engineering handbook. Asakura Shoten, 05 July 1999, 358-362